# EUROPEAN PATENT APPLICATION

(11) **EP 0 570 632 A1**
(43) Date of publication of application: **24.11.1993**
(21) Application number: 92201475.8
(22) Date of filing: 21.05.1992
(51) Int. Cl.: C08L 55/02, C08K 7/04, C08K 7/18

(54) **Mass polymerized styrene polymer composites reinforced with a mixture of fibrous and spherical particles**

(71) Applicant: THE DOW CHEMICAL COMPANY, Midland, Michigan 48640 (US)
(72) Inventor: Gkogkidis, Antonios, W-7553 Muggensturm (DE)
(74) Representative: Smulders, Theodorus A.H.J., Ir.

(57) **Abstract**

The invention is related to a composite comprising a mass polymerized rubber reinforced styrene polymer composite having dispersed through the polymer matrix thereof a fibrous filling material and a spherical filling material.

## Description

The present invention relates to reinforced mass polymerized styrene polymer composites.

Reinforcement of polymers in general is a well-known practice as it leads to improved polymer properties. Properties of interest for reinforced polymers include mechanical and thermal properties such as toughness, impact strength, flexural modulus, tensile strength and heat distortion temperatures. Reinforcement can be performed with both soft and rigid fillers. Soft fillers, e.g. elastomeric reinforcement, are used in the production of commercial polymers such as ABS (acrylonitrile-butadiene-styrene) and HIPS (high impact polystyrene). However, elastomeric reinforcement may have a negative effect on some of the mechanical properties of the polymer. Although the toughness and impact strength measured according to ISO 180 (Izod impact) or ISO 179 (notched Charpy impact) are improved, elastomeric reinforcement usually lowers other mechanical or thermal properties of the polymer, such as the modulus.

Non-elastomeric, or rigid, fillers can be employed to overcome this disadvantage, which is due to the rubber fraction in the polymer. However, this has the disadvantage of decreasing the impact strength.

The rigid fillers that are used can be fibrous (like glass fibers), spherical (like glass beads) or flake-shaped (like mica). In the case of reinforced composites comprising fibrous fillers such as chopped glass fibers, it is reported that a partially preferred orientation of the fibers within thermoplastic resins will occur in the direction of the melt flow (R.P. Hegler in Kunststoffe, 74, pp. 5 (1984)) and lead to an improvement of modulus and strength properties in this preferred orientation. Due to this orientation, severe differences in dimensional shrinkage, known as warpage, and increased internal stresses are observed, leading to low impact strength values. Another well known disadvantageous effect of fiber reinforcement is difficult processability due to increased viscosity. Additionally, fiber reinforcement will increase the surface roughness of the final composite, which is welcome for specific applications where high friction coefficients and low wear are required. However in most cases this will limit applications to parts which are hidden from view. Presently, relatively expensive and properties-reducing measures are taken to obtain smooth surfaces of injection moulded fiber-reinforced parts, such as higher mould and polymer temperatures or higher injection speeds.

The use of spherical fillers for reinforcement does not lead to problems like warpage and difficulties in processing as mentioned above, since no orientation can occur and no significant increase of viscosity is observed. However, improvement of strength and modulus properties will be limited to only small values, and the heat distortion temperature will not appreciable increase above that of the pure polymer resin.

In case of flake filled materials, orientation of the flakes and forming of agglomerates will create severe limitations for their application in plastics.

Besides the possibility of changing processing conditions to remove non-desired effects after reinforcement, the combination of two or more different solid fillers in one matrix has been proposed to be advantageous. This is already commonly practised with combinations between carbon-, glass-and aramide fibers, giving improved fatigue properties.

In GB 2150 141 B, the mixture of glass beads with finely dispersed silica particles, known under the Trade Mark AEROSIL from DEGUSSA (Frankfurt, Germany), is claimed to give an increase of the bulk settled density in thermosettable polyester resins.

The combination of mica flakes and glass beads is reported in J 56 084745-A to give low anisotropy in shrinkage (warpage) and good mechanical strength properties.

There are several reported studies on glass fiber/glass bead filled resins describing improvement of elastic modulus and shear strength in polyester reinforced with aligned glass fibers and glass beads.

S.E. Dai and M.R. Piggott have reported upon polyester reinforced with aligned glass fiber/glass bead (Polymer Composites, February 1986, Vol. 7, pp. 19-22). The effect of this combination is an improvement of the elastic modulus and shear strength.

In the proceedings of the 22nd annual meeting of the Reinforced Plastic Division of the Society of the Plastics Industry Inc., Washington D.C. (Section 17-B, pp. 1), H. Wells reported upon epoxy reinforced with laminated glass fiber/glass bead, the effect of which is an improvement of elastic modulus and shear strength and a decrease of impact strength.

In the case of polypropylene and polyamide reinforced with both glass fibers and glass beads in a ratio of 1:1 and processed by injection moulding, only improved dispersion of the fibers due to the presence of glass beads could be achieved. The impact strength of these hybride composites does not improve, but is generally somewhere between the values of the single filler reinforces composites (M.J. Balow and D.C. Fuccella in the proceedings of the 37th Annual Conference of the Reinforced Plastics/Composites Institute of the Society of the Plastics Industry, Inc., January 11-15, 1982, session 18-E, pp. 1).

Until now it has not been possible to produce reinforced styrene polymers with both increased elastic modulus and impact strength.

An object of the present invention is to provide polymer composites reinforced in such a way that they show improved properties without showing the drawbacks of the elastomer reinforcement (lowered mechanical and thermal properties).

Surprisingly it has now been found that the use of a mixture of fibrous and spherical particles in the reinforcement of mass polymerized styrene polymer composites leads to a product with improved properties like toughness and impact strength, without the disadvantage of decreasing other mechanical or the thermal properties.

Accordingly, the present invention relates to a composite comprising a mass polymerised polymer of one or more monovinylidene aromatic compounds having discrete particles of an elastomer as well as a fibrous and a spherical non-elastomeric material dispersed throughout the polymer matrix phase.

The composites of the present invention show an outstanding combination of impact strength, high temperature properties, tensile strength and flexural modulus.

It was found, that when the ratio of the volume fraction between fibrous and spherical material is between 0.1 and 9, unexpected high impact strength is obtained.

In addition to the excellent impact behaviour, it has been observed that the heat distortion temperature, measured according to ISO 75, surprisingly remains advantageously high, at levels obtained with only fibrous filler reinforcement, if the ratio of volume fraction between fibrous and spherical filler is not below 0.5.

Other properties such as flexural strength and flexural modulus or tensile strength and modulus of the materials prepared according to the present invention, follow the "rule of mixtures", according to which values for certain ratios between fibrous and spherical filler can be calculated on the basis of the values obtained when using only one individual filler reinforcement.

Additionally, it has been found that the materials according to the invention have the advantage that surfaces of moulded parts are smoother compared to polymer resin surfaces where only fibrous materials have been used for reinforcement, and, therefore, surface appearance will be excellent after painting.

Furthermore, due to the combination of spherical and fibrous fillers, the flow behaviour is excellent and thus the processability of the materials according to the present invention is improved.

Other remarkable effects are the reduced anisotropic effect, reducing in particular the warpage and resulting in an isotropic mould shrinkage behaviour.

In a preferred embodiment a further surprising improvement is achieved when the fibrous material is partially adhered to the polymer matrix by means of a chemical substance applied on the surface of the fibrous material and known as coupling agent.

The polymers of the present invention are derived from one or more monovinylidene aromatic compounds. Representative monovinylidene aromatic compounds include styrene; alkyl substituted styrenes such as alpha-alkyl-styrene (e.g., alpha methyl styrene and alpha ethyl styrene) and ring alkylated styrenes and isomers thereof (e.g., ortho ethyl styrene, 2,4-dimethyl styrene and vinyltoluene, particularly, ortho or para vinyl toluene); ring substituted halo-styrenes such as chloro-styrene, 2,4-dichloro-styrene, and the like; styrenes substituted with both a halo and alkyl group such as 2-chloro-4-methyl-styrene; and vinyl anthracene. In general, the preferred monovinylidene aromatic monomers are styrene, alpha methyl styrene, one or more of the vinyl toluene isomers, and/or mixtures of two or more of these, with styrene being the most preferred monovinylidene aromatic compound.

Suitable relatively polar comonomer ingredients for use as the minor constituent in (i.e., constituting from about 1 to about 50 wt.% of) the indicated monovinylidene aromatic copolymers include ethylenically unsaturated nitriles such as acrylonitrile, methacrylonitrile, ethacrylonitrile, and mixtures thereof; ethylenically unsaturated anhydrides such as maleic anhydride; ethylenically unsaturated amides such as acrylamide, methacrylamide, etc.; ethylenically unsaturated carboxylic acids and esters thereof such as acrylic acid, methacrylic acid, (methyl)methacrylate, ethylacrylate, hydroxyethylacrylate, n-butyl acrylate or methacrylate, 2-ethyl-hexylacrylate, etc.; ethylenically unsaturated dicarboxylic acid imides such as N-alkyl or N-aryl maleimides such as N-phenyl maleimide; vinylidene chloride and vinylidene bromide; and vinyl esters such as vinyl acetate. The preferred unsaturated nitrile is acrylonitrile.

In preparing said copolymer matrix, the amounts of the monovinylidene aromatic compound and unsaturated nitrile most advantageously employed will vary depending on the physical and chemical properties desired in the final reinforced composite product. In general, the copolymer matrix will advantageously comprise from 5 to 35, preferably 15 to 25 wt.% of the unsaturated nitrile and from 95 to 65, preferably from 85 to 75 wt.% of the monovinylidene aromatic compound, said weight percents being based on the total amount of monovinylidene aromatic compound and unsaturated nitrile.

If employed, any of the comonomers other than an unsaturated nitrile will generally be employed in amounts of less than 10 wt.%, more generally less than 5 wt.%, based on the total weight percent of the monomers employed in preparing the continuous polymer matrix phase of the reinforced styrenic polymer resin.

Especially preferred polymer blend compositions are those wherein the monovinylidene aromatic copolymer is rubber modified and comprises on a total rubber-modified copolymer weight basis from about 1 to about 30 (preferably from about 2 to about 25, more preferably from about 3 to about 20 and most preferably from about 5 to about 15) weight percent of a rubbery polymer having a glass transition temperature of 0°C or lower. Especially preferred rubbery polymers for use herein are those having a glass transition temperature of -20°C or lower. Examples of suitable rubbery polymers include homopolymers of 1,3-conjugated alkadiene monomers such as butadiene, isoprene, piperylene and chloroprene; copolymers of said 1,3-conjugated alkadienes with monovinylidene aromatic monomers (e.g., styrene, etc.); alpha-ethylenically unsaturated nitriles such as acrylonitrile; or alpha-olefins such as ethylene and propylene. A copolymer of ethylene, propylene and optionally, a non-conjugated diene can also be employed. Especially preferred rubbery copolymers for use herein include polymers composed of from about 55 wt.%, more preferably from 65 to 85 wt.%, of 1,3-butadiene and up to 45 wt.%, more preferably from 15 to 35 wt.%, of a monovinylidene aromatic compound, preferably styrene. The rubber is advantageously employed in the form of dispersed particles as is well known to those skilled in the art.

In the preparation of the rubber-reinforced polymer resin, the dispersed rubber particles are prepared at a particle size which imparts the desired properties to the polymer matrix. This will vary depending upon the method by which the rubber-reinforced polymer is prepared. The rubber particles reinforcing the polymeric resin generally will have a volume average particle size of from 0.1 to 20 µm. Advantageously, the rubber particles will have a volume average particle size of from 0.6 to 10 µm, preferably from 0.8 to 5 µm.

The rubber may contain a small amount of cross-linking agent, although excessive cross-linking can result in the loss of the rubbery characteristics of the rubber.

The aforementioned rubber-modified monovinylidene aromatic graft copolymer is prepared by mass or mass/suspension polymerization via free radical polymerization of the selected comonomer materials in the presence of the modifying rubber material.

In general, mass polymerization involves polymerizing a solution of the rubber and monomer(s) at conditions sufficient to form discrete rubber particles of the desired particle size dispersed throughout the polymerized monomer. The polymerization is advantageously conducted in one or more substantially linear stratified flow or so-called plug-flow reactors such as described in U.S. Patent No. 2,727,884 which may or may not comprise recirculation of a portion of the partially polymerized product or in a stirred tank reactor wherein the contents of the reactor are essentially uniform throughout.

Optionally, the reaction mixture will contain an organic liquid diluent. Organic liquid diluents suitably employed are normally liquid organic materials which do not interfere with the polymerization at the polymerization conditions employed and which form a solution with the polymerizable monomer(s) and the polymer prepared therefrom. Representative organic liquid diluents include aromatic and inertly substituted aromatic hydrocarbons such as toluene, benzene, ethylbenzene and xylene; saturated or inertly substituted, saturated aliphatics having either straight or branched chains of five or more carbon atoms such as heptane, hexane and octane; alicyclic or inertly substituted alicyclic hydrocarbons having five or six carbon atoms such as cyclohexane. Preferred of such organic liquid diluents are the inertly substituted aromatics, with ethylbenzene and xylene being most preferred. In general, the organic liquid is employed in amounts sufficient to improve the processability and heat transfer during polymerization, e.g., flow characteristics of the polymerization mixture. Such amounts will vary depending on the rubber, monomer and diluent employed, the process equipment and the desired degree of polymerization. In general, if employed, the reaction mixture will normally contain from 2 to 30 wt.% of the diluent based on the total weight of the rubber, monomer and diluent.

The polymerization is advantageously conducted in the presence of a free-radical initiator such as the peroxide initiators, e.g., dibenzoyl peroxide or 1,1-(bis)-tertiary butylperoxyycyclohexane. In general, the initiator will be employed in an amount from 100 to 5000 weight parts per million weight parts of the monomers employed. The polymerization mixture can further contain other additives such as a plasticizer or lubricant e.g., mineral oil; an antioxidant, e.g., an alkylated phenol such as di-tert-butyl-p-cresol; a polymerization aid e.g., a chain transfer agent such as an alkyl mercaptan; pigments; colorants; flame retardants; UV stabilizers; a mold release agent, e.g., zinc stearate; and other commonly employed additives. These additives are employed at the appropriate time, which may be before, during or after polymerization. Temperatures at which polymerization is normally conducted are dependent on the specific components employed but will generally vary from 60°C to 190°C.

In the preparation of the rubber-reinforced polymer resin, the mass polymerization can be continued to the desired completion and then treated to remove any unreacted monomer such as by flashing off the monomer and other volatiles at an elevated temperature under vacuum.

Mass/suspension polymerization involves initially mass polymerizing the monomer/rubber mixture and, following phase inversion (i.e., the conversion of the polymer from a discontinuous phase dispersed in a continuous phase of the rubber solution through the point where there is not distinct continuous or discontinuous phase in the polymerization mixture to continuous polymer phase having the rubber dispersed therethrought) and subsequent size stabilization of the rubber particles, suspending the partially polymerized product, with or without additional monomer(s), in an aqueous medium which generally contains a polymerization initiator. Subsequently, polymerization is completed using suspension polymerization techniques.

In the practice of the present invention, a mixture of fibrous and spherical filler is incorporated within the rubber-reinforced polymer resin.

The fibrous filler advantageously employed in the practice of the present invention includes mineral fibers containing amounts of silica (SiO₂) and alumina (Al₂O₃) such as glass, quartz, basalt, Wollastonite and asbestos fibers. The most preferred fiber is glass fiber. Other applicable fibers contain oxides of Ti, Ca, Al, Na, P or Mg, such as calcium sulfate fibers or phosphate fibers, or are based on C (carbon fibers), B (boron fibers) or on metals (steel fibers, copper fibers) and so-called ceramic fibers such as alumina, SiN, SiC and others. Further examples of fibrous fillers include fibers of the organic type such as aramide or high molecular polyethylene fibers. Naturally, the range of diameters is based most conveniently on the commercially available dimensions of the various fiber types.

According to the available lengths of the fibrous materials, orientation of the fibers within the product prepared in the sense of the present invention is preferably one or more dimensional, such as in laminates, mats or webs, where the fiber length is between endless and 0.1 µm. The preferred orientation is random with fiber lengths between 0.1 µm and 100 mm, with length between 0.1 and 1000 µm being especially preferred.

The spherical filler advantageously employed in the practice of the present invention includes in general spherical shaped particles such as glass beads, which may be solid, hollow or thick shell beads, or fly-ash. Glass beads are preferred. Preferably, the number average bead diameter is between 0.1 and 600 µm, more preferably is between 0.1 and 200 µm, and most preferably is between 0.1 and 100 µm.

The total volume amount of filler employed in preparing the composite of the present invention is dependent on the desired properties of the final product as well as on the basic properties of the employed components:
i) the resin, ii) the fibrous material and iii) the spherical material. Furthermore, the total amount of filler is dependent on the orientation of the fibrous material, the length and diameter of the fibrous material and on the diameter of the spherical material. In general the composite will contain total filler amounts, based on volume, of 1 to 70 vol.%, preferably between 2 and 50 vol.%, most preferably between 10 and 40 and especially preferred between 25 and 40 vol.%.

The ratio of the volume fraction between fibrous fillers to spherical fillers employed in the preparation of said composites is from about 95:5 to about 5:95, preferably from about 95:5 to about 30:70 and more preferably from about 95:5 to about 50:50.

The filled composites of the present invention are prepared via methods well-known to those skilled in the art, including, for example, melt blending, e.g. in an extruder, and molding, such as injection molding.

In an optional embodiment of the invention, the polymeric matrix contains mass polymerized ABS with one or more optional resins including, for example, polyacetal, polyester, polyamide, thermoplastic polyurethane or polycarbonate.

As has been noted, the indicated monovinylidene aromatic copolymer ingredient generally constitutes from about 5 to about 98 wt.% of the polymer blend compositions hereof. Preferably, said monovinylidene aromatic copolymer is employed in amounts corresponding to from about 12 to about 90 (more preferably from about 15 to about 80, especially from about 20 to about 70) parts by weight per 100 parts of the combined or total weight of the selected monovinylidene aromatic copolymer, and elastomeric polymer ingredients.

Due to the outstanding performance profile of the materials prepared according to the present invention, these composites are usefully applied in a wide range of applications such as automotive parts, moulded products, household and appliances goods, business machines, electronic parts and other engineering applications.

The following Experiments are set forth to illustrate the present invention and should not be construed to limit its scope. In the examples, all parts and percentages are by weight and all temperatures are in degrees Celsius unless otherwise indicated.

### Example 1

A mass ABS polymer resin is used as the matrix, with 16% acrylonitrile, 12 wt.% polybutadiene, and 1.2 µm average rubber particle size.

A portion of the ABS resin is melt blended with
a) a glass fiber, coated with a silane coupling agent, available as 414x7 from Owens Corning Fiberglass, having a diameter of about 14 µm and a length of 4.5 mm and
b) a solid glass bead, coated with a silane coupling agent, available as 3000-CP05 from Potters-Ballotini GmbH, having an average diameter of up to 50 µm.

The total amount of filler employed in the ABS matrix is 14.3 vol.%. The volume ratio of glass fibers to glass beads is 11.9/2.4 (= 5.0). The melt blending is performed in a Buss KOKNEADER model MDKE 46 operating under the following conditions: screw speed 200 rpm; output 15-20 kg/hr.; and temperature profile : barrel 230-240°C; screw 130-140°C; die 220°C; and product 225-235°C. Test specimens are produced by injection molding.

### Example 2

Using the method of Ex. 1, a composite is prepared, except that the volume ratio of glass fibers to glass beads is 9.5/4.8 (= 2.0).

### Example 3

Using the method of Ex. 1, a composite is prepared with a volume ratio of glass fibers to glass beads of 7.15/7.15 (= 1.0).

### Example 4

Using the method of Ex. 1, a composite is prepared with 8.9 vol.% filler. The volume ratio of glass fibers to glass beads is 6.67/2.23 (= 3.0).

### Comparative Example 1

A composite is prepared using the method of Ex. 1 with an ABS matrix comprising 14.3 vol.% of glass fibers (type 414x7) and no glass beads.

### Comparative Example 2

A composite is prepared using the method of Ex. 1 with an ABS matrix comprising 14.3 vol.% of glass beads (3000-CP05) and no glass fibers.

### Comparative Example 3

A composite is prepared using the method of Ex. 1 with an ABS resin as continuous matrix and 20 vol.% of thick shell, partially hollow glass beads available under the Registered Trade Mark SYTON from Monsanto Europe S.A. and with a mean diameter of 30 µm. No glass fiber is employed.

### Comparative Example 4

A composite is prepared using the method and materials of Comp. Ex. 3, comprising an ABS matrix with 21 vol.% partially hollow glass beads with a mean diameter of 100 µm.

In Table 1 the results of various tests, in which several mechanical and thermal properties have been tested, are summarized. The results in Table 1 indicate that the composites of Examples 1-4 have improved notched Izod impact compared to composites having only beads or only fibers as filler. The heat distortion temperature (HDT) of the composites of Examples 1-4 is equal to or only slightly lower than the HDT of the samples of Comparative Examples 1-4.

**Table 1**

| Property | Unit | Examples | | | | Comparative Examples | | | |
|---|---|---|---|---|---|---|---|---|---|
| | | 1 | 2 | 3 | 4 | 1 | 2 | 3 | 4 |
| Amount total filler | % | 14.3 | 14.3 | 14.3 | 8.9 | 14.3 | 14.3 | 20.0 | 21.0 |
| Ratio fiber/bead | | 5.0 | 2.0 | 1.0 | 3.0 | only fibers | only beads | only beads | only beads |
| Tensile strength | MPa | 80 | 72 | 65 | 67 | 90 | 28 | 30 | 27 |
| Flexural modulus | MPa | 5800 | 5090 | 4800 | 4360 | 6820 | 2530 | 1900 | 2000 |
| Izod n.* | kJ/m² | 9.8 | 8.9 | 8.9 | 11 | 6.8 | 5.9 | 7.1 | 5.1 |
| HDT | °C | 102 | 102 | 101 | 99 | 102 | 86 | 86 | 86 |

| | | | | | | | | | |
|---|---|---|---|---|---|---|---|---|---|
| * n. is notched. | | | | | | | | | |

All values given in Table 1 are determined with unannealed samples according to the following methods:
- Tensile strength according to ISO 3268
- Flexural Modulus according to ISO 178
- notched Izod according to ISO 180 at 23°C
- Heat Distortion Temperature (HDT) according to ISO 75, method A/120/1.82

### Comparative Examples 5-10

The method of Example 1 is repeated using styrene-acrylonitrile resin and ABS made from the emulsion process as matrix polymers. As filler chopped glass fibers from Owens Corning type 414x7 and glass beads from Potters Ballotine type 3000-CP05 are employed.

The results in Table 2 show that a combination of fibers and beads in SAN and emulsion-produced ABS does not increase the notched Izod impact properties.

**Table 2**

| Property | Unit | Comparative Example | | | | | |
|---|---|---|---|---|---|---|---|
| | | 5 | 6 | 7 | 8 | 9 | 10 |
| Polymer matrix | | SAN(1) | SAN | SAN | ABS (2) | ABS | ABS |
| Amount total filler | % | 30 | 30 | 30 | 30 | 30 | 30 |
| Ratio fiber/bead | | only fibers | 1:1 | only beads | only fibers | 5:1 | 1:1 |
| Tensile strength | MPa | 120 | 95 | 55 | 63 | 59 | 45 |
| Flexural modulus | MPa | 8050 | 6250 | 4300 | 6490 | 5925 | 3970 |
| Notched Izod | kJ/m² | 4.8 | 3.1 | 1.0 | 4.6 | 4.6 | 4.2 |
| HDT | °C | 105 | 104 | 91 | 95 | 98 | 92 |

| | | | | | | | |
|---|---|---|---|---|---|---|---|
| 1) SAN is SAN 110 from The Dow Chemical Company | | | | | | | |
| 2) ABS is emulsion polymerized resin from Mazzucchelli type SICOFLEX (TM) 85 | | | | | | | |

### Comparative Example 11

A composite is prepared from a polyamide type 6/6 as matrix resin, comprising totally 40 wt.% glass fibers and solid glass beads both coated with silane coupling agent and having a volume ratio of fiber to beads of 1. The solid fillers are incorporated into the polyamide resin by means of a single screw extruder. Test specimens are produced by injection molding.

### Comparative Example 12

A composite is prepared according to the method of Comp. Ex. 11, except that it is reinforced only with 40 wt.% of silane treated glass fibers, having an average aspect ratio of fiber length/fiber diameter of 20/1.

### Comparative Example 13

A composite is prepared according to the method of Comp. Ex. 11, using 40 wt.% of silane treated solid glass beads and no glass fiber.

The Comparative Examples 11-13 are tested for mechanical properties and the results are summarized in Table 3.

**Table 3**

| Property | Unit | Comp.Example 11 | Comp.Example 12 | Comp.Example 13 |
|---|---|---|---|---|
| Amount total filler | wt.% | 40 | 40 | 40 |
| Ratio fiber/bead | - | 1 | only fibers | only beads |
| *Tensile strength | MPa | 140 | 203 | 73 |
| **Izod notched | kJ/m² | 8.16 | 16.8 | 4.90 |

| | | | | |
|---|---|---|---|---|
| * Tensile strength is measured according to ASTM D-638. | | | | |
| ** Notched Izod impact strength is measured according to ISO 180 at 23°C. | | | | |

Comparative Examples 11, 12 and 13 demonstrate clearly that combined addition of fibrous and spherical glass in polyamide 6/6 resin does not show improvement in impact compared to the composites reinforced only with one individual filler type.

### Example 5

A composite is prepared via melt blending using 20 wt.% mass-ABS (identical to mass ABS used for Example 1), 30 wt.% polyoxymethylene from CELANESE known as CELCON (TM) M25, 30 wt.% polycarbonate from The Dow Chemical Company known as CALIBRE (TM) 300-15, and 20 wt.% of filler consisting of glass fibers with glass beads from Potter Ballotini type 3000-CP05.

### Comparative Example 14

A composite is prepared, using the same method and materials as in Example 5, with the only difference being that instead of glass fibers and glass beads, only chopped glass fibers (from Owens Corning type 414x7) are used.

This composite is compared with the composite of Example 5. The results are shown in Table 4 and demonstrate the improved impact strength of the composite prepared with a mixture of fibers and beads.

**Table 4**

| Property | Unit | Example 5 | Comp.Example 14 |
|---|---|---|---|
| Amount total filler | % | 20 | 20 |
| Ratio fiber/beads | - | 1:1 | only fibers |
| Tensile strength | MPa | 68 | 68 |
| Flexural modulus | MPa | 4070 | 5410 |
| Notched Izod | kJ/m² | 7 | 4 |
| HDT | °C | 114 | 123 |

## Claims

1. Composite comprising a mass polymerized rubber reinforced styrene polymer composite having dispersed through the polymer matrix thereof a fibrous filling material and a spherical filling material.

2. Composite according to claim 1, wherein the mass polymerized styrene polymer composite resin comprises mass polymerized ABS.

3. Composite according to claim 2, wherein the ABS resin comprises from about 1 to about 30, more preferably from 2 to 25 wt.% of rubber.

4. Composite according to claim 1, wherein the mass polymerized styrene polymer composite resin comprises HIPS.

5. Composite according to claim 1, wherein the spherical filling material consists of solid, hollow or thick shell glass beads, or fly-ash.

6. Composite according to claim 1, wherein the fibrous filling material consists of organic-based fibers, quartz, basalt, Wollastonite or asbestos fibers, and most preferably of glass fibers.

7. Composite according to claims 1-6, wherein the ratio of the volume fraction between fibrous and spherical filling material is from 95:5 to about 5:95, more preferred from 95:5 to about 30:70, and most preferred from 95:5 to about 50:50.

8. Composite according to claims 1-7, wherein the fiber length of the fibrous material is between 0.1 µm and 100 millimeter, and most preferred between 0.1 and 1000 µm.

9. Composite according to claims 1-8, wherein the ratio of length to diameter of the fibrous filling material is at least 10.

10. Composite according to claims 1-9, wherein the diameter of the spherical filling material is between 0.1 and 600 µm, more preferred between 0.1 and 200 µm, and most preferred between 0.1 and 100 µm.

11. Composite according to claims 1-10, wherein the amount of filling material is between 1 and 70 vol.%, more preferred between 2 and 50 vol.%, more preferred between 10 and 40 vol.% and most preferred between 25 and 40 vol.% relative to the volume of the composite.
